# EUROPEAN PATENT SPECIFICATION

(11) **EP 3 548 647 B1**
(45) Date of publication and mention of the grant of the patent: **11.11.2020**
(21) Application number: 17771404.5
(22) Date of filing: 18.09.2017
(51) Int. Cl.: C23F 11/08, C09K 8/54, C11D 3/00, C23F 11/10, E21B 41/02

(54) **USE OF A COMPOSITION CONTAINING AT LEAST ONE BIODEGRADABLE SUGAR-AMIDE-COMPOUND IN COMBINATION WITH AT LEAST ONE SULFUR-BASED SYNERGIST FOR CORROSION INHIBITION OF A METALLIC EQUIPMENT IN OILFIELD APPLICATIONS**
VERWENDUNG EINER ZUSAMMENSETZUNG ENTHALTEND MINDESTENS EINE BIOLOGISCH ABBAUBARE ZUCKER-AMID-VERBINDUNG IN KOMBINATION MIT ZUMINDEST EINEM SCHWEFEL-BASIERTEN SYNERGIST ZUR KORROSIONSINHIBIERUNG EINER METALLISCHEN EINRICHTUNG IN ERDÖLFELDBETRIEB
UTILISATION D'UNE COMPOSITION CONTENANT AU MOINS UN COMPOSÉ BIODÉGRADABLE DE TYPE SUCRE-AMIDE EN COMBINAISON AVEC AU MOINS UN AGENT SYNERGETIQUE À BASE DE SOUFRE POUR L'INHIBITION DE LA CORROSION D'UN ÉQUIPEMENT MÉTALLIQUE DANS L'INDUSTRIE PÉTROLIÈRE

(30) Priority: 01.12.2016 US 201615366301; 15.12.2016 EP 16204300
(43) Date of publication of application: 09.10.2019
(73) Proprietor: Clariant International Ltd, 4132 Muttenz (CH)
(72) Inventor: WYLDE, Jonathan, The Woodlands, Texas 77381 (US); OBEYESEKERE, Nihal, The Woodlands Texas 77059 (US); ARIYARATNA, Thenuka, The Woodlands Texas 77381 (US); LEINWEBER, Dirk, 65719 Kelkheim (DE); SCHERL, Franz-Xaver, 84508 Burgkirchen (DE)
(74) Representative: Mikulecky, Klaus
(86) International application number: PCT/EP2017/073398
(87) International publication number: WO 2018/099624

(56) References cited:
- WO-A1-2008/110789
- WO-A1-2015/131987
- DE-U1-202014 010 358
- US-A1- 2014 091 262
- US-A1- 2015 069 301

## Description

The present invention relates to an improved method for corrosion control as well as an improved composition for use as corrosion inhibitor. More particularly, the present invention relates to a sugar-based surfactant in combination with at least one sulfur-based synergist for enhanced corrosion protection for application during crude oil production from subterranean formations.

Corrosion is a serious and challenging problem in the oil and gas industry and its prevention is acute in offshore operations. Water, acidic gases (such as hydrogen sulfide and carbon dioxide), organic acids, and oxygen contribute to the corrosion of mild steel, and other types of alloys used in the oil and gas industry. Corrosion can cause oil and gas to leak from flowlines which can lead to explosions, accidents, and environmental disasters. Corrosion inhibitors are essential for preventing uncontrolled discharge of oil and /or gas into the environments surrounding the flowlines.

Corrosion inhibitors are either water-soluble or oil-soluble chemical compounds. When added in small quantities to an aggressive medium, these chemicals inhibit corrosion by changing the surface conditions of the metal. Factors like CO₂, H₂S, S, polysulfides, organic acids, composition of liquids, flow conditions, inorganic anions, such as chlorides, oxygen, pressure and temperature have an influence on the corrosion rate.

Amine containing compounds have long been known as film-forming corrosion inhibitors (see: Production of Chemicals for the Oil and Gas Industry, Malcolm A. Kelland, 2009, CRC Press Taylor & Francis Group).

WO-92/06073 discloses processes for making surfactants from fatty acids or their derivatives in combination with N-alkylglucamines, the latter made by reductive amination of glucose. Glucose reductive amination processes are more fully disclosed in US-2016962.

US-1985424 discloses the manufacturing of surfactants by reacting the product of heating glucose and aqueous methylamine in the presence of hydrogen and a hydrogenating catalyst under pressure with an organic carboxylic acid such as stearic acid or oleic acid. The condensation product, prepared at about 160 °C, is said to be predominantly a secondary amide.

In the prior art, the substances including sugar based 1-Deoxy-1-N-octylamino-D-glucitol are known to have surfactant effects. The substance is for instance disclosed in Journal of Surfactants and Detergents, Volume 7, No 2, pages 147 - 159 and pages 161 - 167.

US-2993887 discloses glucamide structures and their synthesis.

Environ. Sci. Technol. 1996, 30, 2143-2147 and Langmuir 1996, 12, 588 - 590 discloses glucamide surfactants forming microemulsion systems between water and chlorocarbons.

US-5725470 discloses the use of glucamides in processes for soil remediation.

WO-96/28458 discloses a sugar based compound like Deoxy-1-N-octylamino-D-glucitol as biocide for instance within industrial applications.

CA-2162459 discloses the use of glucamides with other components such as alkyl polyglycosides as corrosion inhibitors for silver when used in dishwashing detergent applications.

WO-96/33953 teaches the use of a stain corrosion and scale inhibitors for laundry applications where N-methyl D-glucamine is reacted with other components to form novel products to provide stain removal while protecting the metallic surfaces of washing machine internals.

US-3063790 describes the use of N-methyl D-glucamine as a corrosion inhibitor for use in the oilfield applications and in particular for water soluble corrosion inhibition.

US-4549882 generically describes the use of glucamine derivatives for application in alcohol containing fuels for preventing corrosion of internal combustion engines.

DE-102014003367 describes the use of N-Methyl-N-Acyl glucamines as corrosion inhibitor in metal working operations in which also the use of sulphonates and/or sulphates is described of which the latter are being used as emulsifiers.

The next set of patents is based around the use of sulfur-containing compounds as corrosion inhibitors.

US-4536302 discusses the use of sulfur compounds where the oxidation state is either 0 or >0. Thiocyanate or thio amide is used at concentrations as high as 1 g/L. Furthermore, the reference discloses the addition of a reducing sugar (mono-saccharide, disaccharide or oligosaccharides) such as glucose, fructose, lactose, etc. These sugars are added at even higher rates of 2 to 10 g/L.

US-4728446 describes a corrosion inhibitor composition containing an alkali or alkaline-earth metal halide in water, zinc ions and thiocyanate ions.

US-4784778 and US-4784779 disclose the use of 2-mercaptoethanol, sodium, ammonia and/or calcium thiocyanate, with or without the addition of aldose based antioxidants such as arabinose, ascorbic acid, isoascorbic acid, gluconic acid etc. Ammonium thioglycolate is also mentioned as an additional component. It is noteworthy that very high concentration of inhibitor is required in the experimental data.

US-4980074 discloses the corrosion inhibitor as a blend of soluble aliphatic or aromatic aldehydes with or without olefinic unsaturation in combination with an alkali metal, thiocyanates or ammonium thiocyanates.

EP-0139260 discusses phosphorus containing compounds and the use of phosphonium salts such as triphenylphosphine. This is in combination with thiocyanate as well as a commercial product being added called "TRETOLITE™ KI-86". "TRETOLITE™ KI-86" is disclosed as a Mannich amine-based formulation.

US 2014/091262 A1, US 2015/069301 A and WO 2008/110789 A1 disclose each the use of a composition comprising an amide and one sulfur-containing compound, as a corrosion inhibitor for metallic oilfield equipment.

DE 20 2014 010358 U1 and WO 2015/131987 A1 disclose each the use of a composition comprising at least a N-Methyl-N-acylglucamin of formula (I) as a corrosion
inhibitor for metal surfaces in metal working fluids.

In general, the mechanism for sulfur containing compounds is one of passivating layer formation and is a very effective means of corrosion control. However, there is an increased risk of stress corrosion cracking, and several failures in the industry have been attributed to the reliance of sulfur containing compounds alone as means of effective corrosion control.

The intention of the current invention is to deliver new corrosion inhibitors that lower the corrosion rates to as low as possible levels in oilfield fluids. It is further an object of the present invention to provide higher corrosion inhibiting performance than the existing art. It is further, an object of the present invention to be applicable and compatible in all oil industry brine types including low and high salinity and hardness which is often not specifically mentioned in the art. It is further an object of the current invention to provide corrosion protection particularly at high temperature (150 °C), as well as low temperature performance, due to the trend to drill deeper, hotter, higher pressure wells. It is still further an objective of the present invention to overcome the disadvantage of prior art technologies that are either/or non-sustainably sourced, toxic, poorly biodegradable, and bio-accumulating and acceptable for use in even the most environmentally sensitive areas of the world.

In a first aspect, the invention relates to the use of a composition in corrosion inhibition, the composition comprising
a) at least one compound according to formula (1) 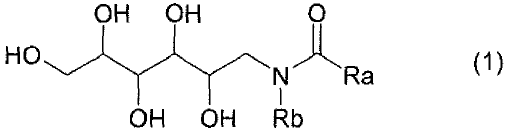 wherein
   Ra is a C₅ to C₂₉ linear, branched, saturated or unsaturated aliphatic hydrocarbon group,
   Rb is a C₁ to C₂₃ linear, branched, saturated or unsaturated aliphatic hydrocarbon group,
   or a compound obtainable from formula 1 by eliminating one mole of water from the polyhydroxy group, thereby forming a cyclic ether, and
b) at least one sulfur synergist selected from the group consisting of
   b1) a compound according to formula (5)

      R¹-S-R² (5)

      wherein
      R¹ and R² are independently hydrogen, C₁ to C₁₈ alkyl, C₂ to C₁₈ alkenyl or a C₇ to C₁₈ alkyl aromatic group, and wherein R¹ and R² may contain oxygen or nitrogen atoms, or may be substituted with a carboxylic acid group or an amide group, with the proviso that R¹ and R² are not both hydrogen
   b2) a metal or ammonium thiosulfate salt, and
   b3) a compound according to formula (6)

      S=C(NHR⁵)(NHR⁶) (6)

      wherein
      R⁵ and/or R⁶ are independently H, C₁ to C₁₀ alkyl, C₂ to C₁₀ alkenyl, C₅ to C₉ aryl groups or mixtures thereof.

The use of the composition of the first aspect is as a corrosion inhibitor formulation for metallic oilfield equipment. Such use is preferably performed during the production and/or processing of crude oil and natural gas, particularly in the presence of sweet gas.

In a second aspect of the invention there is provided a process for preventing corrosion on metallic oilfield equipment as defined in claim 15. The process is preferably applied to metal which is in contact with sweet gas during crude oil or natural gas production or processing in an aqueous medium.

The preferred embodiments as described below will be applicable to all aspects of this invention.

The first component of the instant invention may be a compound of formula 1 or a product obtained therefrom by elimination of one mole of water from its polyhydroxy alkyl chain, whereby a cyclic structure is obtained, which has an ether group. Preferred compounds that are obtained from the compound of formula 1 by elimination of one mole of water from its polyhydroxy alkyl chain are compounds according to the formulae (2) to (4)

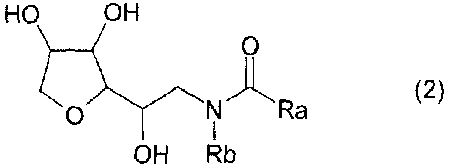

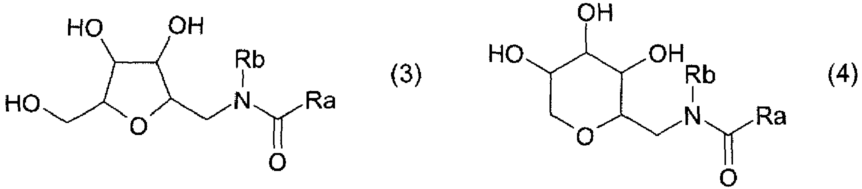

In formulae (2) - (4), Ra and Rb have the meaning as mentioned above.

Ra preferably means a C₇ to C₂₃, more preferably a C₉ to C₂₁, most preferably C₁₁ to C₁₇ aliphatic residue. In another preferred embodiment Ra is either an alkyl or an alkenyl group, preferably an alkyl group. In another preferred embodiment Ra is an alkyl or alkenyl group that is branched.

Rb preferably is an alkyl or alkenyl group. Preferably, Rb has 1 to 5 carbon atoms. Mostly preferred, Rb is methyl.

If the sulfur synergist is a compound according to formula (5)

R¹-S-R² (5)

in one preferred embodiment R¹ is H and R² is an alkyl group with 1 to 12 carbon atoms, i.e. the sulfur synergist is a thiol. R² may also contain oxygen or nitrogen atoms.

In another preferred embodiment, R¹ is alkyl with 1 to 4 carbon atoms and R² is alkyl with 2 to 26 carbon atoms, i.e. the sulfur synergist is a thioether. Both R¹ and R² may also contain oxygen or nitrogen atoms.

In the case where R¹ or R² contains a carboxylic acid group, salts may be formed as follows:
a) with monovalent Li, Na, K, Ag, Cu or NH₄, and tertiary amines with alkyl, alkylene or alkoxyalkyl side groups, that may also be cyclic and may contain the heteroatoms O or N;
b) with bivalent counterions wherein the counterion is selected from the group consisting of Mg, Ca, Sr, Cu, Zn, Pb or Fe and tertiary amines with alkyl, alkylene or alkoxyalkyl side groups, that may also be cyclic and may contain the heteroatoms O or N;
c) with trivalent counterions wherein the counterion is selected from the group consisting of Al, Bi or Fe.

In this embodiment, the expression alkyl means alkyl with 1 to 20 carbon atoms. Alkylene means alkylene with 1 to 20 carbon atoms. Alkoxy means an alkoxy group with 1 to 100 alkoxy groups, preferably 1 to 100 ethoxy or propoxy groups. Alkoxy groups may be pure ethoxy, pure propoxy or mixed.

Such compounds are thioglycolic acid salts if one of R¹ or R² is hydrogen. The use of thioglycolic acid salts is a preferred embodiment of the invention. Another name for thioglycolic acid is mercapto acetic acid.

In another preferred embodiment the sulfur synergist is 2-mercaptoethanol, whose structure is:

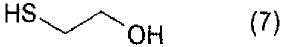

If the sulfur synergist is a thiosulfate it corresponds preferably to a compound according to formula (8)

Mₓ(S₂O₃)_{y} (8)

wherein
x = 2 and y = 1 and M = Li, Na, K, Ag, Cu or NH₄;
x = 1 and y = 1 and M = Mg, Ca, Sr, Cu, Zn, Pb or Fe;
x = 2 and y = 3 and M = Al, Bi or Fe.

In yet another preferred embodiment, ammonium thiosulfate is used, whose structure is:

(NH₄)₂S₂O₃ (9)

In another preferred embodiment the sulfur synergist is thiourea, whose structure is:

S=C(NHR⁵)(NHR⁶) (10)

wherein
R⁵ and R⁶ are preferably alkyl groups with 1 to 4 carbon atoms that may also contain oxygen or nitrogen atoms or aromatic structures with 6 to 12 carbon atoms.

The sulfur synergists are preferably selected from the group consisting of thioglycolic acid, sodium thiosulfate, ammonium thiosulfate, sodium thiosulfate, potassium thiosulfate, thiourea, sodium thioglycolate, ammonium thioglycolate, thiourea and derivatives such as 1,2-diethylthiourea, propylthiourea, 1,1-diphenylthiourea, thiocarbanilide, 1,2-dibutylthiourea or 2-Mercaptoethanol, 3-(Methylthio)propanal, thioacetic acid, cyste-amine, 1-mercapto-2-propanol, 2-Methoxyethane-thiol, 3-Mercapto-1-propanol, 2,3-Dimercapto-1-propanol, 1-Thio-glycerol, mercaptosuccinic acid, Cysteine, N-Carbomoyl-L-cysteine, N-Acetylcysteamine, 4-Mercapto-1-butanol, 1-Butanedithiol, 4-Cyano-1-butanethiol, 2-Methyl-1-butanethiol, 2-Ethylhexane thiol, N-Alkyl and alkenyl-methionine, such as N-Oleyl-methionine and the corresponding carboxylic acid salts (organic- and inorganic based).

In another preferred embodiment, N-Oleyl-Methionine and the corresponding amine salts as described in EP-1979508 can be employed as group b1 sulfur synergist.

The composition to be used according to this invention is suitable as corrosion inhibitors, in particular in petroleum extraction and processing plants which come into contact with salt water.

In the composition to be used according to this invention, the ratio of the glucamide component a) to the sulfur synergist b) is from 100:1 to 1:30 preferably from 30:1 to 1:1 by weight.

Since the compounds to be used according to this invention are usually prepared as highly viscous liquids, they are preferably used as a 10 - 50 % by weight strength solution, for example in water, glycols, glycol ethers, alcohols and other suitable solvents. These solutions can, as an overall formulated composition, also comprise other corrosion-inhibiting active ingredients and also emulsifiers, antifoaming agents and further customary additives which improve the useful properties of the product being applied.

The overall formulated composition as described in the paragraph above is then dosed into the crude oil stream in an amount of 0.2 to 500 ppm, preferably from 1 to 300 ppm, most preferably from 30 to 300 ppm.

One of the advantages of the composition to be used according to this invention is that there is provided at least partly a renewable product-based substance. By adding it to the produced fluids, i.e. oil/water emulsions during oil production, it can provide an enhanced protection against corrosion of the downhole tubulars, processing equipment, pipeline systems and ultimately refineries.

Further advantages of the composition to be used according to this invention is superior corrosion inhibitor performance, particularly at high temperature in high salinity brines saturated with corrosive gases, e.g. CO₂.

The composition works well under heat, pressure, high salinity and high water hardness. A temperature of up to 150 °C is possible. A salinity of up to 300,000 ppm is also possible.

The starting materials of the surfactant systems according to formulae (1) to (4) are inexpensive and renewable. These surfactants are non-toxic, biodegradable and reusable.

In most cases it is not necessary to use organic solvents in formulations comprising compounds (I) - (IV) and the sulfur-based synergist. Water is used as solvent which is advantageous from an economic and from an environmental point of view. Another unique advantage is that the disclosed surfactant does not readily absorb/interact to/with mineral surfaces due to its secondary amide character and the disability to form intermolecular NH hydrogen bonds which reduces the loss of surfactant concentration for instance in a recycled system.

It must be noted that, as used in this specification and the appended claims, the singular forms "a", "an" and "the" include plural referents unless the context clearly dictates otherwise.

If nothing else is defined, any terms and scientific terminology used herein are intended to have the meanings commonly understood by those of skill in the art to which this invention pertains.

The term "about" as used in connection with a numerical value throughout the description and the claims denotes an interval of accuracy, familiar and acceptable to a person skilled in the art. Said interval is +/- 10 %.

"Crude Oil" is used herein to denote a naturally occurring mixture consisting of a complex mixture of hydrocarbons of various molecular weights and other organic compounds that are typically found in geologic formations beneath the Earth's surface.

"Hydrocarbon" is used herein to denote an organic compound comprising hydrogen and carbon.

"Sweet gas" is used herein to denote an extracted natural gas that is found to be free from hydrogen sulfide.

In the embodiments the surfactant comprises a secondary amide of formulae (1) - (4). The secondary amides, in contrast with primary amides, are not able to form intermolecular hydrogen bonds, ensuring potential negative intermolecular interactions that result in liquid crystal, gel formation or poor solubilization properties as well as strong interaction/adsorption with/on metallic pipe surfaces.

In one embodiment of all aspects, the glucamide surfactants described herein are thermally stable up to 150 °C without any degradation. In other words, the glucamide surfactants are potentially applicable at reservoir and process temperatures up to 150 °C but also is dependent upon salinity and in general produced water and oil chemistry.

Most of the commercially available corrosion inhibitor systems for these applications are either toxic, multi-component systems that are not tolerant to both high salinity and high temperatures, or have been formulated with components that only provide limited functionality, when compared to the current high performance embodiments of the instant invention. Additionally, the commercially available treating solution is of limited inhibition efficiency especially if environmental acceptability is a requirement. Another problem related to the prior art systems is that the kinetics of functionality are slow, the time to achieve maximum inhibition efficiency can take several hours due to interactions between the components of the prior art corrosion inhibitor packages and the high temperature hard brine itself.

The composition to be used according to this invention is added to the oil/water system or injected into the application to provide corrosion protection. The injection fluid may additionally contain other ingredients known to those familiar with the art, including but not restricted to acids, dispersants, viscosifiers, lubricity agents, scale inhibitors, friction reducers, crosslinkers, surfactants, scavenger pH adjusters, iron control agents, breakers; this is especially true if any produced water (or recycled water) is used to perform the treatment.

Employing the embodiments of the instant invention improves nullification of the oil/water to render it benign and non-corrosive and damaging to the integrity of the metallurgy and equipment it will be used to treat, thus allowing better integrity management and control and corrosion inhibition protection. Other applications of the embodiments of the instantaneous invention include treating water for downhole injection for pressure support, treatment of water for drilling and work-over use, wettability alteration and well cleanout.

Other features and uses of the invention and their associated advantages will be evident to a skilled person in the art upon reading the description and the examples.

### Examples

If not stated otherwise, references to % or ppm mean weight -% or weight -ppm throughout this specification.

The following abbreviations to substances have been used in this section: The samples and the results are summarized below:

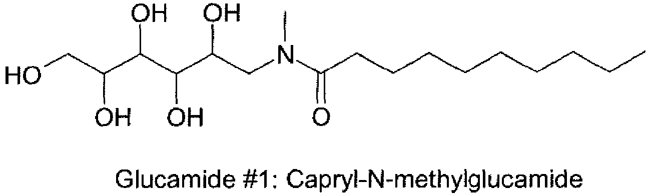

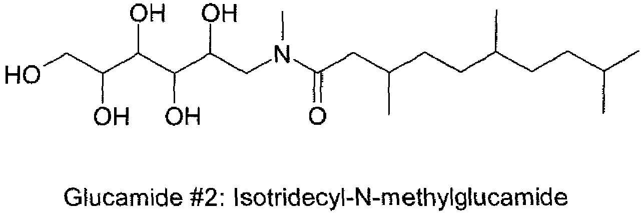

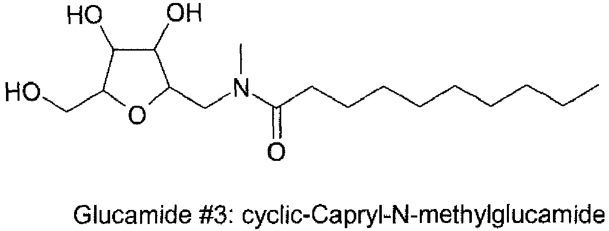

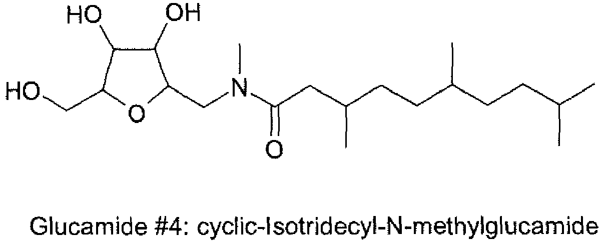

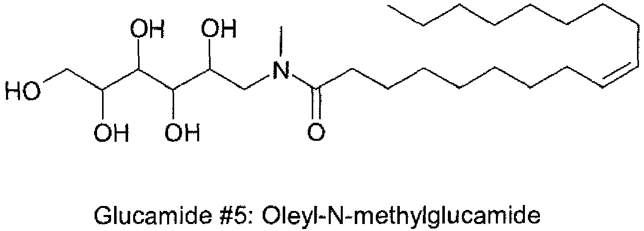

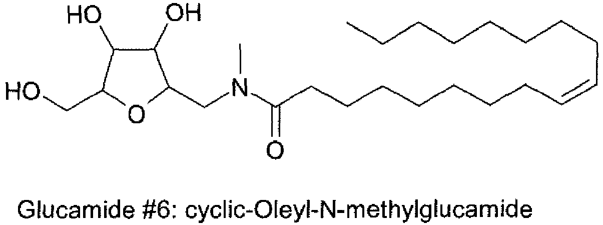

### Abbreviations:

- ATG:: Ammonium Thioglycolate (thiol) / b1
- TG-TEA:: Thioglycolate salt with triethanolamine (thiol) / b1
- MET:: Mercaptoethanol (thiol) / b1
- ATS:: Ammoniumthiosulfate (Thiosulfate) / b2
- OMet:: N-Oleyl-Methionine (thioether) / b1
- OMet-TEA:: N-Oleyl Methionine salt with triethanolamine (thioether) / b1
- TU:: Thiourea / b3
- AS:: Ammonium sulfate
- IAA:: Isoascorbic acid
- TM:: Test material / glucamide
- Ref:: Reference (sodium benzoate) in OECD 306 test
- mpy:: milli-inch per year

1 mpy is 0.0254 mm per year

Firstly the environmental data were determined according to OECD 306 biodegradability and aquatic toxicity testing on the glucamides and the result is outlined in Tables 1 and 2.

**Table 1: OECD 306 biodegradation of additives and aquatic toxicity testing of Glucamide #1**

| No. | | Day [%] | | | | | |
|---|---|---|---|---|---|---|---|
| | | 7 | 14 | 21 | 28 | | |
| 1.1 | Glucamide #1 | 15 | 25 | 33 | 31 | | |
| 1.2 | MET | 5 | 6 | 8 | 17 | | |
| 1.3 | ATG | 9 | 20 | 33 | 39 | | |
| 1.4 | OMet | 60 | 60 | 60 | 60 | | |
| 1.5 | TU | 19 | 32 | 20 | 55 | | |
| 1.6 | Reference | 78 | 74 | 86 | 68 | | |
| | | | | | | | |

| No. | Aquatic Toxicity | Test | | | Range-finding result | | Definitive result |
|---|---|---|---|---|---|---|---|
| | | | | | [mg/l] | | [mg/l] |
| 1.7 | Glucamide # 1 | 72 hr Algae EC₅₀ | | | 335.40 | | 165.24 |

**Table 2: Marine BODIS and aquatic toxicity testing of Glucamide #5**

| No. | | ThOD | Addition rate | Day [%] | | | |
|---|---|---|---|---|---|---|---|
| | | [mgO₂/mg] | [mg/bottle] | 7 | 14 | 21 | 28 |
| 2.1 | Glucamide # 5 | 2.056 | 4.864 | 23 | 33 | 37 | 42 |
| 2.2 | TM+Ref | - | - | 45 | 52 | 57 | 64 |
| 2.3 | Reference | 1.60 | 12.00 | 66 | 77 | 81 | 83 |
| | | | | | | | |

| No. | Aquatic Toxicity | Test | | Range-finding result | | Definitive result | |
|---|---|---|---|---|---|---|---|
| | | | | [mg/l] | | [mg/l] | |
| 2.4 | Glucamide # 5 | 72 hr Algae EC₅₀ | | 6.199 | | 4.55 | |

The OECD 306 test is disclosed in the April 2005 version of the OECD guideline for testing of chemicals. The results clearly show the positive results for biodegradation and toxicity of the glucamides and the Sulphur synergists described in this application. A test for ATG was not conducted as this is an inorganic salt.

In order to evaluate the corrosion inhibition efficacy of the formulations, two different test methods were employed: rotating cylinder electrode (RCE) tests and high pressure, high temperature (HPHT) autoclave weight loss tests. For all testing, the following standard brine composition was used (as outlined in table 3):

**Table 3: Synthetic brine composition for corrosion testing**

| Ionic Species | Ionic Concentration [mg/l] |
|---|---|
| Sodium (Na⁺) | 914.87 |
| Potassium (K⁺) | 32.93 |
| Magnesium (Mg²⁺) | 110.24 |
| Calcium (Ca²⁺) | 34.68 |
| Strontium (Sr²⁺) | 1.15 |
| Chloride (Cl⁻) | 1644.95 |
| Bicarbonate (HCO₃⁻) | 12.11 |
| Sulfate (SO₄²⁻) | 229.58 |

A gas composition of 100 % CO₂ was used throughout testing.

The metallurgy of the coupons tested was C1018 carbon steel for RCE testing and HPHT autoclave testing. Coupons were polished mechanically using 320 grit silicon-carbide (SiC) paper, 400 grit SiC paper, then 600 grit SiC paper and rinsed with water then acetone prior to testing.

The rotating cylinder electrode (RCE) tests were conducted in Pyrex™ glass reaction kettles that were heated to 65.5 °C (150 °F). The testing solution was comprised of 900 mL of brine. The electrode rotation rate was set at 2000 RPM, which generated a wall shear stress of 7.0 Pa. Linear polarization resistance (LPR) measurements were made with a Gamry electrochemical measurement system. The working electrode was made of a 1018 carbon steel (CS) cylinder with a surface area of 3.16 cm². A Hastelloy C276 electrode was used as a pseudo-reference, and a -titanium rod was used as the counter electrode. The corrosion inhibitors were added based on the brine volume after the baseline corrosion rate was monitored for approximately 1.5 hours. The baseline corrosion rate corresponds to the blank corrosion value. Upon completion of the tests, the electrodes were cleaned in an inhibited acid bath according to ASTM G1 C.3.5, and weighed to 0.1 mg.

High pressure, high temperature (HPHT) rotating cage autoclave (RCA) tests were used to simulate more realistic and extreme conditions for the purpose of evaluating system corrosivity as well as inhibitor performance. The test solution consisted of 800 mL of brine. The brine was deoxygenated using 100 % carbon dioxide gas before final pressurization into the autoclaves. Three weight loss corrosion coupons fixed on a PEEK (Polyether ether ketone) insulated cage were used in each autoclave. General corrosion rates were calculated by weight loss measurement according to ASTM G170 (and associated standards referenced therein). Test conditions were constant in all examples with a temperature of 66 °C and 149 °C at a constant pressure of 3.45 MPa (34.5 bar) the inhibitors were dosed in at a variety of dose rates ranging from 150 to 300 ppm (based on each inhibitor component) and the tests were run for 3 to 6 days.

The surfaces of the electrodes and coupons were analyzed after each test for pitting potential by using a high powered metallurgical microscope. The reflected light microscope was capable of analyzing samples up to 1,000-times magnification. The microscope was mounted with a camera and included brightfield, darkfield, and Differential Interface Controls (DIC) modes.

**Table 4: Corrosion test (RCE)**

| No. | Example kind | Sugar derivative | Sulfur-based derivative | Corrosion Rate [mpy] | | | Protection [%] | |
|---|---|---|---|---|---|---|---|---|
| | | [ppm] | [ppm] | 2 hr baseline | 2 hr after Cl dose | Final 3 hr | 2 hr after Cl dose | Final 3 hr |
| 4.1 | Comparative 1 | Glucamide #1 (12) | None | 158.4 | 44.2 | 11.6 | 72.1 | 92.7 |
| 4.2 | Comparative 2 | Glucamide #2 (12) | None | 165.7 | 34.6 | 10.2 | 79.1 | 93.8 |
| 4.3 | Comparative 3 | Glucamide #3 (12) | None | 168.2 | 44.8 | 10.9 | 73.4 | 93.5 |
| 4.4 | Comparative 4 | Glucamide #4 (12) | None | 173.4 | 41.6 | 9.8 | 76.0 | 94.3 |
| 4.5 | Comparative 5 | Glucamide #5 (12) | None | 159.1 | 38.6 | 9.6 | 75.7 | 94.0 |
| 4.6 | Comparative 6 | Glucamide #6 (12) | None | 181.7 | 42.4 | 10.6 | 76.7 | 94.2 |
| 4.7 | Comparative 7 | None | ATG (12) | 168.6 | 47.6 | 14.5 | 71.8 | 91.4 |
| 4.8 | Comparative 8 | None | MET (12) | 178.3 | 45.6 | 15.4 | 74.4 | 91.4 |
| 4.9 | Comparative 9 | None | ATS (12) | 158.5 | 38.7 | 13.9 | 75.6 | 91.2 |
| 4.10 | Comparative 10 | None | OMet (12) | 176.9 | 39.6 | 12.9 | 77.6 | 92.7 |
| 4.11 | Comparative 11 | None | TU (12) | 158.1 | 38.5 | 10.9 | 75.6 | 93.1 |
| 4.12 | Comparative 12 | Imidazoline acetate - 12 ppm Commercial Product A | None | 172.6 | 72.3 | 21.6 | 58.1 | 87.5 |
| 4.13 | Inventive 1 | Glucamide #1 (10) | ATG (2) | 168.2 | 32.6 | 5.4 | 80.6 | 96.2 |
| 4.14 | Inventive 2 | Glucamide #1 (11) | ATG (1) | 176.8 | 30.9 | 5.5 | 82.5 | 96.9 |
| 4.15 | Inventive 3 | Glucamide #1 (10) | MET (2) | 182.6 | 36.6 | 4.3 | 80.0 | 97.6 |
| 4.16 | Inventive 4 | Glucamide #1 (10) | ATS (2) | 156.9 | 28.6 | 3.4 | 81.8 | 97.8 |
| 4.17 | Comparative 13 | IAA (10) | ATS (2) | 176.1 | 60.9 | 17.6 | 65.4 | 90.0 |
| 4.18 | Comparative 14 | Glucamide #1 (10) | AS (2) | 165.9 | 50.6 | 15.9 | 69.5 | 90.4 |
| 4.19 | Inventive 5 | Glucamide #1 (10) | OMET (2) | 184.3 | 38.1 | 5.7 | 79.3 | 96.9 |
| 4.20 | Inventive 6 | Glucamide #1 (10) | OMET (1), ATG (1) | 176.5 | 32.6 | 4.8 | 81.5 | 97.3 |
| 4.21 | Inventive 7 | Glucamide #1 (10) | TG-TEA (2) | 156.8 | 30.0 | 3.2 | 80.9 | 98.0 |
| 4.22 | Inventive 8 | Glucamide #1 (10) | OMet-TEA (2) | 166.7 | 29.1 | 4.0 | 82.5 | 97,6 |
| 4.23 | Inventive 9 | Glucamide #1 (10) | TU (2) | 178.7 | 29.3 | 5.0 | 83.6 | 97.2 |

The HPHT RCA results are displayed in Table 5 in which a comparison is made for the following conditions:
1. 66 °C, 3.45 MPa (34.5 bar) 700 rpm, 3 days
2. 149 °C, 2.76 MPa (27.6 bar) 700 rpm, 5 days

**Table 5: HPHT RCA testing results at 66 °C and 149 °C**

| No. | Product | Glucamide (amount in ppm) | Sulphur synergist (amount in ppm) | Average Corrosion Rate [mpy] At 66 °C | Average Corrosion Rate [mpy] At 149 °C |
|---|---|---|---|---|---|
| 5.1 | Blank | | | 321.37 | 434.85 |
| 5.2 | Comparative 1 | Glucamide #1 (150) | None | 6.25 | 41.90 |
| 5.3 | Comparative 2 | Glucamide #2 (150) | None | 4.23 | 35.66 |
| 5.4 | Comparative 3 | Glucamide #3 (150) | None | 4.81 | 36.10 |
| 5.5 | Comparative 4 | Glucamide #4 (150) | None | 3.62 | 29.73 |
| 5.6 | Comparative 5 | Glucamide #5 (150) | None | 3.87 | 32.76 |
| 5.7 | Comparative 6 | Glucamide #6 (150) | None | 3.92 | 35.79 |
| 5.8 | Comparative 7 | None | ATG (150) | 6.32 | 40.61 |
| 5.9 | Comparative 8 | None | MET (150) | 5.21 | 38.12 |
| 5.10 | Comparative 9 | None | ATS (150) | 4.89 | 34.87 |
| 5.11 | Comparative 10 | None | OMet (150) | 7.89 | 44.45 |
| 5.12 | Comparative 11 | None | TU (150) | 6.02 | 42.09 |
| 5.13 | Comparative 12 | Imidazoline acetate - 150 ppm Commercial Product A | None | 11.24 | 76.20 |
| 5.14 | Inventive 1 | Glucamide #1 (75) | ATG (75) | 2.74 | 20.8 |
| 5.15 | Inventive 2 | Glucamide #1 (120) | ATG (30) | 1.89 | 21.7 |
| 5.16 | Inventive 3 | Glucamide #1 (75) | MET (75) | 2.24 | 22.8 |
| 5.17 | Inventive 4 | Glucamide #1 (75) | ATS (75) | 2.65 | 24.1 |
| 5.18 | Comparative 13 | IAA (75) | ATS (75) | 7.53 | 46.3 |
| 5.19 | Comparative 14 | Glucamide #1 (75) | AS (75) | 6.79 | 45.2 |
| 5.20 | Inventive 5 | Glucamide #1 (75) | OMET (75) | 2.55 | 22.9 |
| 5.21 | Inventive 6 | Glucamide #1 (100) | OMET (20), ATG (30) | 2.31 | 25.0 |
| 5.22 | Inventive 7 | Glucamide #1 (75) | TG-TEA 75) | 2.03 | 26.6 |
| 5.23 | Inventive 8 | Glucamide #1 (75) | OMet-TEA (75) | 2.11 | 23.6 |
| 5.24 | Inventive 9 | Glucamide #1 (75) | TU (75) | 2.41 | 21.9 |

Comparative examples 1 to 6 show the results of the various glucamides 1 to 6, which already show encouraging results as described in DE-102014003367. Comparative examples 7 to 11 show the results for the Sulphur based materials only. As a comparison to the glucamides only, comparative example 12 shows the results obtained when using imidazole acetate as a reference sample, which shows much worse results. Inventive examples 1-9 describe the use of a thiol, thio ether, thioacetic acid (as inorganic or organic salt), N-Oleyl-methionine (free acid or organic salt), thiourea or thiosulfate, which show a dramatic increase in performance over the glucamides or Sulphur-based materials only and a synergistic effect when using these sulfur-based derivatives, or combinations thereof. Comparative example 13, shows the effect of replacement of the glucamide by Isoascorbic acid analogous as described in US-4784778 and US-4784779 and shows the beneficial effect of the glucamide. The use of a sulfate as decribed in comparative example 14 (to DE-102014003367) shows that a normal sulfate does not help in corrosion inhibition.

Surprisingly, it was found that the use of the combination of a glucamide and at least one sulfur-based synergist showed the best effects in corrosion inhibition.

## Claims

1. Use of a composition comprising
a) at least one compound according to formula (1) 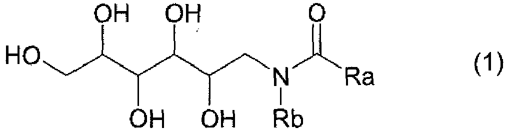 wherein
Ra is a C₅ to C₂₉ linear, branched, saturated or unsaturated aliphatic hydrocarbon group,
Rb is a C₁ to C₂₃ linear, branched, saturated or unsaturated aliphatic hydrocarbon group,
or a compound obtainable from formula 1 by eliminating one mole of water from the polyhydroxy group, thereby forming a cyclic ether, and
b) at least one sulfur synergist selected from the group consisting of
b1) a compound according to formula (5)
R¹-S-R² (5)
wherein
R¹ and R² are independently hydrogen, C₁ to C₁₈ alkyl, C₂ to C₁₈ alkenyl or a C₇ to C₁₈ alkyl aromatic group, and wherein R¹ and R² may contain oxygen or nitrogen atoms, or may be substituted with a carboxylic acid group or an amide group, with the proviso that R¹ and R² are not both hydrogen
b2) a metal or ammonium thiosulfate salt, and
b3) a compound according to formula (6)
S=C(NHR⁵)(NHR⁶) (6)
wherein
R⁵ and/or R⁶ are H, C₁ to C₁₀ alkyl, C₂ to C₁₀ alkenyl or C₅ to C₉ aryl groups or mixtures thereof, as a corrosion inhibitor for metallic oilfield equipment.

2. The use according to claim 1, wherein component a) is obtained from the compound of formula 1 by elimination of one mole of water from its polyhydroxy alkyl chain, and is a compound according to the formulae (2) to (4) 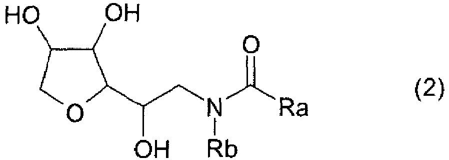 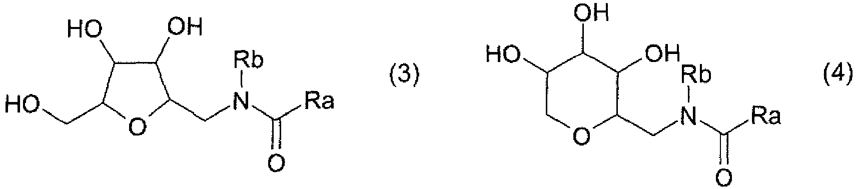 wherein
Ra is a C₅ to C₂₉ linear, branched, saturated or unsaturated aliphatic hydrocarbon group,
Rb is a C₁ to C₂₃ linear, branched, saturated or unsaturated aliphatic hydrocarbon group.

3. Use according to claim 1 and/or 2, in which Ra is an alkyl or alkenyl group with 7 to 21 carbon atoms.

4. Use according to one or more of claims 1-3, in which Rb is methyl.

5. Use according one or more of claims 1-4, in which the sulfur synergist is represented by the formula R¹-S-R² wherein R¹ is hydrogen, and R² is an alkyl group with 1 to 12 carbon atoms that may contain oxygen or nitrogen atoms.

6. Use according one or more of claims 1-4, in which the sulfur synergist is represented by the formula R¹-S-R² wherein
R¹ is an alkyl group having 1 to 4 carbon atoms, that may contain oxygen or nitrogen atoms and
R² is an alkyl group having 2 to 26 carbon atoms, that may contain oxygen or nitrogen atoms

7. Use according to one or more of claims 5 and 6, wherein one of R¹ and R² comprises a carboxylic acid group.

8. Use according to claim 7, in which the sulfur synergist is represented by the formula M(HSCH₂COO)ₓ wherein
a) x=1 and M is selected from the group consisting of Li, Na, K, Ag, Cu or NH₄, and tertiary amines with alkyl, alkylene or alkoxyalkyl side groups, that may also be cyclic and may contain the heteroatoms O or N;
b) x=2 and M is selected from the group consisting of Mg, Ca, Sr, Cu, Zn, Pb or Fe and tertiary amines with alkyl, alkylene or alkoxyalkyl side groups, that may also be cyclic and may contain the heteroatoms O or N;
c) x=3 and M is selected from the group consisting of Al, Bi or Fe.

9. Use according one or more of claims 1-4, in which the sulfur synergist is, represented by the formula Mₓ(S₂O₃)_{y} wherein
x = 2 and y = 1 and M = Li, Na, K, Ag, Cu or NH₄; or
x = 1 and y = 1 and M = Mg, Ca, Sr, Cu, Zn, Pb or Fe; or
x = 2 and y = 3 and M = Al, Bi or Fe.

10. Use according one or more of claims 1-4, in which the sulfur synergist is a thiourea, represented by the formula
S=C(NHR⁵)(NHR⁶) (6)
wherein
R⁵ and/or R⁶ are H, C₁ to C₁₀ alkyl, C₂ to C₁₀ alkenyl or C₅ to C₉ aryl groups or mixtures thereof.

11. Use according to one or more of claims 1 to 10, wherein the concentration of component a) is from 0.1 to 30 ppm.

12. Use according to one or more of claims 1 to 11, wherein the concentration of component b) is from 0.1 to 10 ppm.

13. Use according to one or more of claims 1 to 12, wherein the ratio of the glucamide component a) to the sulfur synergist b) is from 100:1 to 1:30 preferably from 30:1 to 1:1 by weight.

14. Use according to claims 1 to 13, wherein the concentration of the composition according to claims 1 to 13 is from 0.2 to 40 wt.-ppm.

15. Process for preventing corrosion on metallic oilfield equipment, comprising the step of adding a composition according to one or more of claims 1 to 13 to a fluid produced from an oil or gas well, the fluid being in contact with the metallic oilfield equipment.

## Patentansprüche

1. Verwendung einer Zusammensetzung, umfassend
a) mindestens eine Verbindung nach Formel (1) 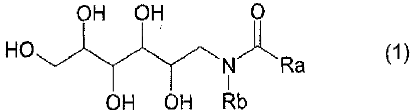 worin
Ra eine unverzweigte, verzweigte, gesättigte oder ungesättigte aliphatische C₅- bis C₂₉-Kohlenwasserstoffgruppe ist,
Rb eine unverzweigte, verzweigte, gesättigte oder ungesättigte aliphatische C₁- bis C₂₃-Kohlenwasserstoffgruppe ist,
oder eine Verbindung, die durch Abspalten von einem Mol Wasser von der Polyhydroxygruppe aus Formel 1 erhalten wird, wodurch ein cyclischer Ether entsteht, und
b) mindestens einen Schwefel-Synergist, ausgewählt aus der Gruppe bestehend aus
b1) einer Verbindung nach Formel (5)
R¹-S-R² (5),
worin
R¹ und R² unabhängig Wasserstoff, C₁- bis C₁₈-Alkyl, C₂-bis C₁₈-Alkenyl oder eine aromatische C₇- bis C₁₈-Alkylgruppe sind, und worin R¹ und R² Sauerstoff- oder Stickstoffatome enthalten können oder mit einer Carbonsäuregruppe oder einer Amidgruppe substituiert sein können, vorausgesetzt, dass R¹ und R² nicht beide Wasserstoff sind,
b2) einem Metall oder Ammoniumthiosulfatsalz, und
b3) einer Verbindung nach Formel (6)
S=C(NHR⁵)(NHR⁶) (6)
worin
R⁵ und/oder R⁶ H, C₁- bis C₁₀-Alkyl-, C₂- bis C₁₀-Alkenyl- oder C₅- bis C₉-Arylgruppen oder Mischungen daraus sind, als Korrosionsinhibitor für Ölfeldausrüstung aus Metall.

2. Verwendung nach Anspruch 1, wobei Komponente a) aus der Verbindung mit der Formel 1 durch Abspalten von einem Mol Wasser von ihrer Polyhydroxyalkylkette erhalten wird und eine Verbindung nach Formel (2) bis (4) ist, 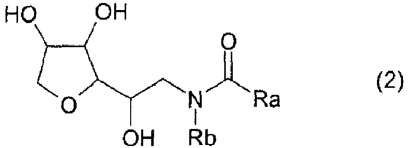 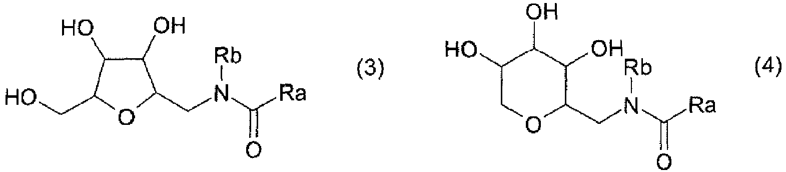 worin
Ra eine unverzweigte, verzweigte, gesättigte oder ungesättigte aliphatische C₅- bis C₂₉-Kohlenwasserstoffgruppe ist,
Rb eine unverzweigte, verzweigte, gesättigte oder ungesättigte aliphatische C₁- bis C₂₃-Kohlenwasserstoffgruppe ist.

3. Verwendung nach Anspruch 1 und/oder 2, bei der Ra eine Alkyl- oder Alkenylgruppe mit 7 bis 21 Kohlenstoffatomen ist.

4. Verwendung nach einem oder mehreren Ansprüchen 1 bis 3, bei der Rb Methyl ist.

5. Verwendung nach einem oder mehreren der Ansprüche 1 bis 4, bei der der Schwefel-Synergist mit der Formel R¹-S-R² dargestellt ist, in der R¹ Wasserstoff ist und R² eine Alkylgruppe mit 1 bis 12 Kohlenstoffatomen ist, die Sauerstoff- oder Stickstoffatome enthalten kann.

6. Verwendung nach einem oder mehreren der Ansprüche 1 bis 4, bei der der Schwefel-Synergist mit der Formel R¹-S-R² dargestellt ist, in der
R¹ eine Alkylgruppe mit 1 bis 4 Kohlenstoffatomen ist, die Sauerstoff- oder Stickstoffatome enthalten kann, und
R² eine Alkylgruppe mit 2 bis 26 Kohlenstoffatomen ist, die Sauerstoff- oder Stickstoffatome enthalten kann.

7. Verwendung nach einem oder mehreren der Ansprüche 5 und 6, wobei R¹ oder R² eine Carbonsäuregruppe umfasst.

8. Verwendung nach Anspruch 7, bei der der Schwefel-Synergist mit der Formel M(HSCH₂COO)ₓ dargestellt ist, worin
a) x=1 und M aus der Gruppe ausgewählt ist bestehend aus Li, Na, K, Ag, Cu oder NH₄, und tertiären Aminen mit Alkyl-, Alkylen- oder Alkoxyalkyl-Seitengruppen, die auch cyclisch sein können und die Heteroatome O oder N enthalten können;
b) x=2 und M aus der Gruppe ausgewählt ist bestehend aus Mg, Ca, Sr, Cu, Zn, Pb oder Fe und tertiären Aminen mit Alkyl-, Alkylen- oder Alkoxyalkyl-Seitengruppen, die auch cyclisch sein können und die Heteroatome O oder N enthalten können;
c) x=3 und M aus der Gruppe bestehend aus Al, Bi oder Fe ausgewählt ist.

9. Verwendung nach einem oder mehreren der Ansprüche 1 bis 4, bei der der Schwefel-Synergist mit der Formel Mₓ(S₂O₃)_{y} dargestellt ist, in der x= 2 und y= 1 und M = Li, Na, K, Ag, Cu oder NH₄; oder x= 1 und y = 1 und M = Mg, Ca, Sr, Cu, Zn, Pb oder Fe; oder
x= 2 und y = 3 und M =Al, Bi oder Fe.

10. Verwendung nach einem oder mehreren der Ansprüche 1 bis 4, bei der der Schwefel-Synergist ein Thioharnstoff ist, der mit der Formel
S=C(NHR⁵)(NHR⁶) (6)
dargestellt ist, worin
R⁵ und/oder R⁶ H, C₁- bis C₁₀-Alkyl-, C₂- bis C₁₀-Alkenyl- oder C₅- bis C₉-Arylgruppen oder Mischungen daraus sind.

11. Verwendung nach einem oder mehreren der Ansprüche 1 bis 10, wobei die Konzentration von Komponente a) zwischen 0,1 und 30 ppm liegt.

12. Verwendung nach einem oder mehreren der Ansprüche 1 bis 11, wobei die Konzentration von Komponente b) zwischen 0,1 und 10 ppm liegt.

13. Verwendung nach einem oder mehreren der Ansprüche 1 bis 12, wobei das gewichtsbezogene Verhältnis der Glucamidkomponente a) zum Schwefel-Synergist b) zwischen 100:1 und 1:30, vorzugsweise zwischen 30:1 und 1:1 liegt.

14. Verwendung nach Anspruch 1 bis 13, wobei die Konzentration der Zusammensetzung nach Anspruch 1 bis 13 zwischen 0,2 und 40 Gewichts-ppm liegt.

15. Verfahren zum Verhindern von Korrosion an Ölfeldausrüstung aus Metall, umfassend den Schritt des Zusetzens einer Zusammensetzung nach einem oder mehreren der Ansprüche 1 bis 13 zu einem Fluid, das von einer Öl- oder Gasbohrung produziert wird, wobei das Fluid mit der Ölfeldausrüstung aus Metall in Kontakt ist.

## Revendications

1. Utilisation d'une composition comprenant
a) au moins un composé selon la formule (1) 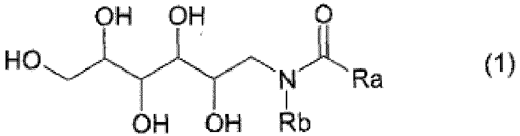
Ra étant un groupe hydrocarboné aliphatique linéaire, ramifié, saturé ou insaturé en C₅₋₂₉,
Rb étant un groupe hydrocarboné aliphatique linéaire, ramifié, saturé ou insaturé en C₁₋₂₃,
ou un composé pouvant être obtenu à partir de la formule 1 par élimination d'une mole d'eau du groupe polyhydroxy, formant ainsi un éther cyclique, et
b) au moins un synergiste soufré choisi dans le groupe constitué par
b1) un composé selon la formule (5)
**R¹-S-R²** **(5)**
R¹ et R² étant indépendamment hydrogène, C₁₋₁₈-alkyle, C₂₋₁₈-alcényle ou un groupe C₇₋₁₈-alkylaromatique, et R¹ et R² pouvant contenir des atomes d'oxygène ou d'azote, ou pouvant être substitués par un groupe acide carboxylique ou un groupe amide, étant entendu que R¹ et R² ne sont pas tous deux hydrogène
b2) un sel de thiosulfate d'un métal ou d'ammonium, et
b3) un composé selon la formule (6)
**S=C(NHR⁵)(NHR⁶)** **(6)**
R⁵ et/ou R⁶ étant des groupes H, C₁₋₁₀-alkyle, C₂₋₁₀-alcényle ou C₅₋₉-aryle ou des mélanges correspondants, en tant qu'inhibiteur de corrosion pour un équipement métallique de champ pétrolifère.

2. Utilisation selon la revendication 1, le composant a) étant obtenu à partir du composé de formule 1 par élimination d'une mole d'eau de sa chaîne polyhydroxyalkyle, et étant un composé selon les formules (2) à (4) 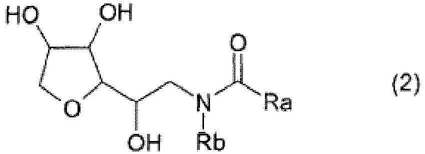 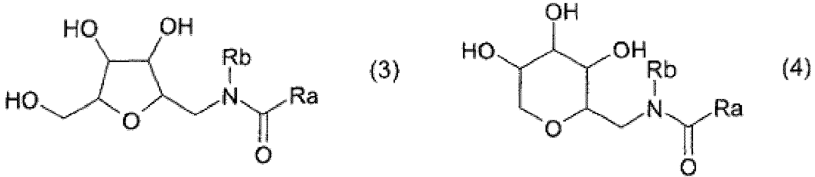
Ra étant un groupe hydrocarboné aliphatique linéaire, ramifié, saturé ou insaturé en C₅₋₂₉,
Rb étant un groupe hydrocarboné aliphatique linéaire, ramifié, saturé ou insaturé en C₁₋₂₃.

3. Utilisation selon la revendication 1 et/ou 2, dans laquelle Rₐ est un groupe alkyle ou alcényle comportant 7 à 21 atomes de carbone.

4. Utilisation selon l'une ou plusieurs des revendications 1 à 3, dans laquelle Rb est méthyle.

5. Utilisation selon l'une ou plusieurs des revendications 1 à 4, dans laquelle le synergiste soufré est représenté par la formule R¹-S-R², R¹ étant hydrogène, et R² étant un groupe alkyle comportant 1 à 12 atomes de carbone qui peut contenir des atomes d'oxygène ou d'azote.

6. Utilisation selon l'une ou plusieurs des revendications 1 à 4, dans laquelle le synergiste soufré est représenté par la formule R¹-S-R²,
R¹ étant un groupe alkyle possédant 1 à 4 atomes de carbone, qui peut contenir des atomes d'oxygène ou d'azote et
R² étant un groupe alkyle possédant 2 à 26 atomes de carbone, qui peut contenir des atomes d'oxygène ou d'azote.

7. Utilisation selon l'une ou plusieurs des revendications 5 et 6, l'un parmi R¹ et R² comprenant un groupe acide carboxylique.

8. Utilisation selon la revendication 7, dans laquelle le synergiste soufré est représenté par la formule M(HSCH₂COO)ₓ, dans laquelle
a) x = 1 et M est choisi dans le groupe constitué par Li, Na, K, Ag, Cu et NH₄, et des amines tertiaires comportant des groupes latéraux alkyle, alkylène ou alcoxyalkyle, qui peuvent également être cycliques et peuvent contenir les hétéroatomes O ou N ;
b) x = 2 et M est choisi dans le groupe constitué par Mg, Ca, Sr, Cu, Zn, Pb et Fe et des amines tertiaires comportant des groupes latéraux alkyle, alkylène ou alcoxyalkyle, qui peuvent également être cycliques et peuvent contenir les hétéroatomes O ou N ;
c) x = 3 et M est choisi dans le groupe constitué par Al, Bi et Fe.

9. Utilisation selon l'une ou plusieurs des revendications 1 à 4, dans laquelle le synergiste soufré est représenté par la formule Mₓ(S₂O₃)_{y}, dans laquelle
x = 2 et y = 1 et M = Li, Na, K, Ag, Cu ou NH₄ ; ou
x = 1 et y = 1 et M = Mg, Ca, Sr, Cu, Zn, Pb ou Fe ; ou
x = 2 et y = 3 et M = Al, Bi ou Fe.

10. Utilisation selon l'une ou plusieurs des revendications 1 à 4, dans laquelle le synergiste soufré est une thiourée, représentée par la formule
**S=C(NHR⁵)(NHR⁶)** **(6)**
R⁵ et/ou R⁶ étant des groupes H, C₁₋₁₀-alkyle, C₂₋₁₀-alcényle ou C₅₋₉-aryle ou des mélanges correspondants.

11. Utilisation selon l'une ou plusieurs des revendications 1 à 10, la concentration en composant a) étant de 0,1 à 30 ppm.

12. Utilisation selon l'une ou plusieurs des revendications 1 à 11, la concentration en composant b) étant de 0,1 à 10 ppm.

13. Utilisation selon l'une ou plusieurs des revendications 1 à 12, le rapport du composant de glucamide a) sur le synergiste soufré b) étant de 100:1 à 1:30, préférablement de 30:1 à 1:1 en poids.

14. Utilisation selon les revendications 1 à 13, la concentration de la composition selon les revendications 1 à 13 étant de 0,2 à 40 ppm en poids.

15. Procédé pour la prévention de la corrosion sur un équipement métallique de champ pétrolifère, comprenant l'étape d'ajout d'une composition selon l'une ou plusieurs des revendications 1 à 13 à un fluide produit à partir d'un puits de pétrole ou de gaz, le fluide étant en contact avec l'équipement métallique de champ pétrolifère.
